# EUROPEAN PATENT APPLICATION

(11) **EP 0 625 669 A1**
(43) Date of publication of application: **23.11.1994**
(21) Application number: 94250105.7
(22) Date of filing: 21.04.1994
(51) Int. Cl.: F16L 53/00, F27D 23/00

(54) **Device for heating pipe surfaces**

(30) Priority: 18.05.1993 US 62913
(71) Applicant: THE KENDALL COMPANY, Mansfield, Massachusetts 02048 (US)
(72) Inventor: Dempster III, William A., Nashua, NH 03060 (US)
(74) Representative: UEXKÜLL & STOLBERG

(57) **Abstract**

Disclosed is an electrical heating device adapted for placement around the surface of a portion of a continuous metal pipeline and when so positioned applying a controlled uniform heat to the pipe surface for a predetermined set time and at a predetermined temperature.

## Description

### BACKGROUND OF THE INVENTION

Various systems for protecting metal pipelines such as those which are intended for inground implantation and which are subjected to degradative environmental forces such as corrosion are known in the art, many of which require the heating of the pipe surface in order to apply a protective coating or wrap thereto.

Typically, this heating is accomplished by flame fired from a source of butane. This standard method of heating the pipe surface suffers from certain inherent disadvantages, chief of which is the difficulty of applying a uniform heat around the circumference of the pipe. This problem is particularly apparent when the heating and subsequent pipe coating is to take place over the ditch prior to implanting. As will be appreciated, heating the underside of the pipe over the ditch is difficult. Another problem confronting the user is the inherent danger of the user being burned due to wind blowing the flame.

Stated simply, the task of this invention is to devise an alternate means of applying heat to the pipe, which means provides a uniform desired heat around the entire circumference of the pipe in a manner which is safe to the user.

### BRIEF DESCRIPTION OF THE INVENTION

In accordance with this invention, the task is solved in an elegant manner by providing an electrical heating device having at least two arcuate sections hinged together, the free ends of the outer two sections being pivotable from an open position enabling placement over the pipe at the desired location for applying heat to a closed position where the device encircles the pipe circumference.

### BRIEF DESCRIPTION OF THE DRAWINGS

Fig. 1 is a schematic view of the heating system of this invention;
Fig. 2 is a perspective view of the heating element in its open position for placement around a pipe;
Fig. 3 is perspective view of the heating element in its closed position encircling a pipe; and
Fig. 4 is a sectional view taken along lines 4-4 in Fig. 3.

### DETAILED DESCRIPTION OF THE INVENTION

As was heretofore mentioned, various systems are known which require heat to be applied to a pipe's surface in order to provide a protective coating to the pipe. For instance, systems are known where the metal surface of the pipe is initially heated in preparation of applying a heat-fusible coating or pipewrap over the thus heated surface. Another procedure requiring heat is the application of a heat-shrinkable sleeve over the pipe joint where two sections of pipe have been welded together. In these and other procedures utilizing a heating step in the application of protective coating to the pipe, it will be appreciated that it is most desirable that the pipe surface be uniformly heated to the desired temperature to assure optimum adhesion of the overlying coating.

The present invention is directed to a novel heating device for applying uniform heat to the pipe surface while at the same time obviating the inherent dangers in the use of device which emit a flame to heat the pipe.

The nature and objects of this invention will be readily understood by reference to the following detailed description taken in conjunction with the accompanying illustrative drawings.

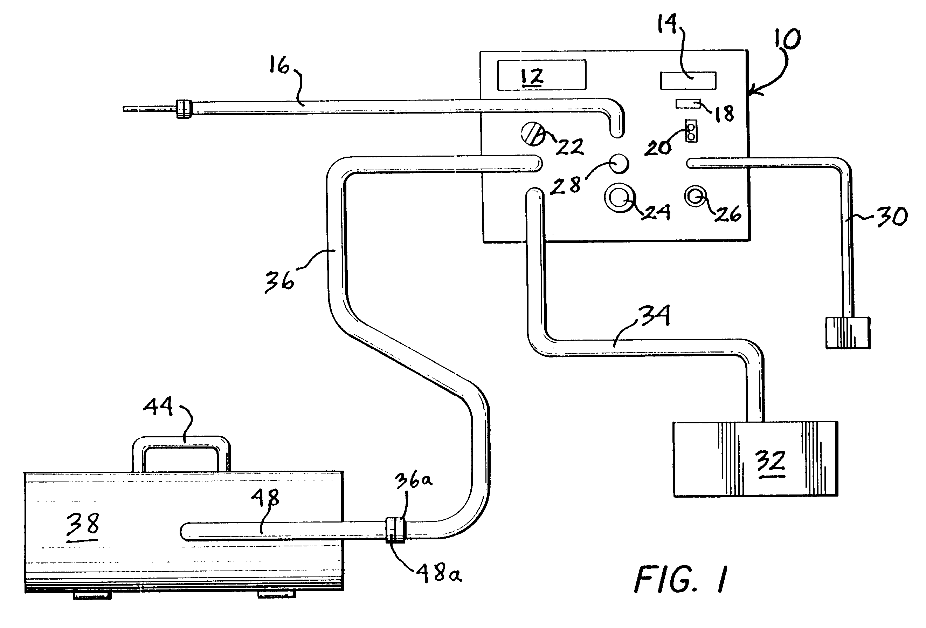

With reference to the schematic illustration shown in Figure 1, a controller 10 is employed for a controlled heating of the heating unit encircling the pipe. Controller 10 may, for purposes of illustration have a microprocessor controller 12 for the heating cycle; a temperature meter 14 communicating with a temperature probe 16; a counter 18 recording the number of heating cycles; a receptacle 20 for connection to a conduit (not shown) to a remote recording device as a data base or computer; an on-off switch for the heating cycle 22; a main power switch 24; an emergency stop 26; an alarm signal 28 emitting a visual and/or audible alarm signal; a grounding cable 30; a portable generator or other source of electricity 32 providing current to the controller via power cable or conduit 34; and a heater cable 36 supplying current to the heating unit 38.

Power cable 34 may comprise a 4-conductor insulated electrical cable that brings electrical power from a portable generator 32 to the controller 10. As is known in the art, the cable may be coated with a neoprene rubber sheath. The cable may have a locking dovetail connecter at its trailing end and which is mated to a power cable receptacle (not shown) on the controller panel.

The grounding cable 30, which may be a single conductor cable that electrically grounds the device, will for example comprise a stranded copper conductor wire encases in a polyvinyl chloride (PVC) insulation sheath and PVC shrink tubing providing additional mechanical, chemical and ultraviolet light resistance. As with the power cable, the grounding cable may be attached to the controller by a connector mated to a grounding cable receptacle (not shown) on the control panel. The other or trailing end of the grounding cable may complete the grounding by being attached to a heavy duty, spring tensioned, electrically conductive steel clamp for attachment to a suitable grounding source.

Heater cable 36 may comprise a 6-conductor cable that connects the control unit to the heating unit 38. As will be appreciated, the heater cable provides electrical power to the heater and receives the communication signal between the heater unit 38 and the microprocessor controller 12. The cable is preferably electrically shielded and encapsulated in UL listed PVC shrink tubing like the grounding cable. It may be provided at its leading end with a dovetail connector mated to a heater cable receptacle (not shown) located on the panel of the controller 10. The trailing end of the heater cable may, for example, have a "quick disconnect" dovetail connector that is mated to a connector on the heating unit 38 to be discussed in more detail hereinafter. As is known, the "quick disconnect" type connectors will semi-lock together during use but easily disconnect without the need for unscrewing.

The foregoing description of the power source for providing electricity to the heating unit involves component parts which per se are not novel and whose selection will be within the expected judgment of the skilled worker in the light of this description of the present invention.

The following description relates to the heating unit whose construction and use is the essence of this invention.

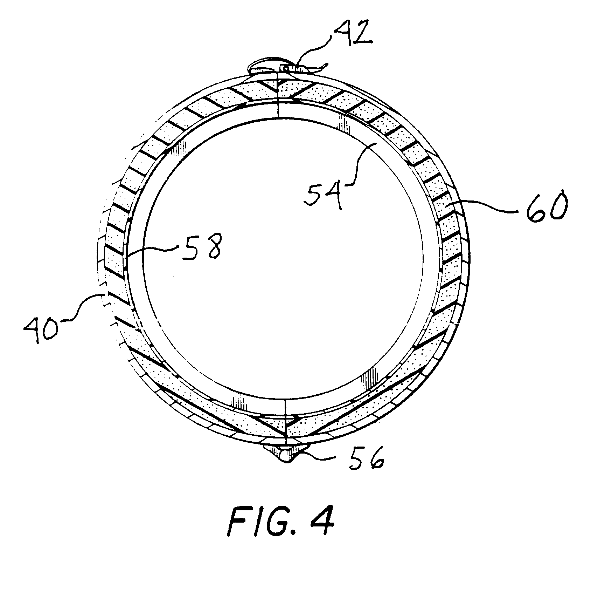

With reference to the sectional view of Fig. 4, the heating unit 38 is shown to be a laminar product having a rigid outer shell 40; and intermediate layer 60 insulating the unit against heat loss; and an inner electrically resistive heating element 58. Outer shell 40 may, for example, comprise a lightweight metal such as aluminum on the order of 0.125 inch thick; the intermediate insulating layer 60 may comprise a per se known rigid or semirigid foam such as silicone foam on the order of 0.5 inch thick; and heating element 58 may be any of the known heating elements encapsulated in a heat-resistant elastomeric material for abrasion, heat and chemical resistance. For optimum efficiency in heat application, on the order of 80-90% of the surface of inner layer 58 should be covered with electrical elements for heat transfer to the pipe surface.

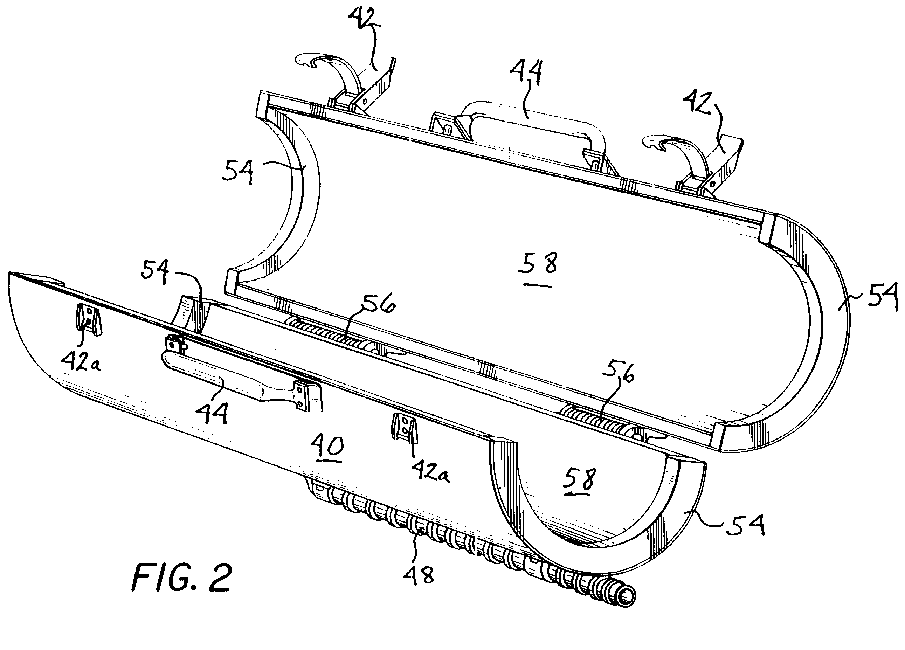

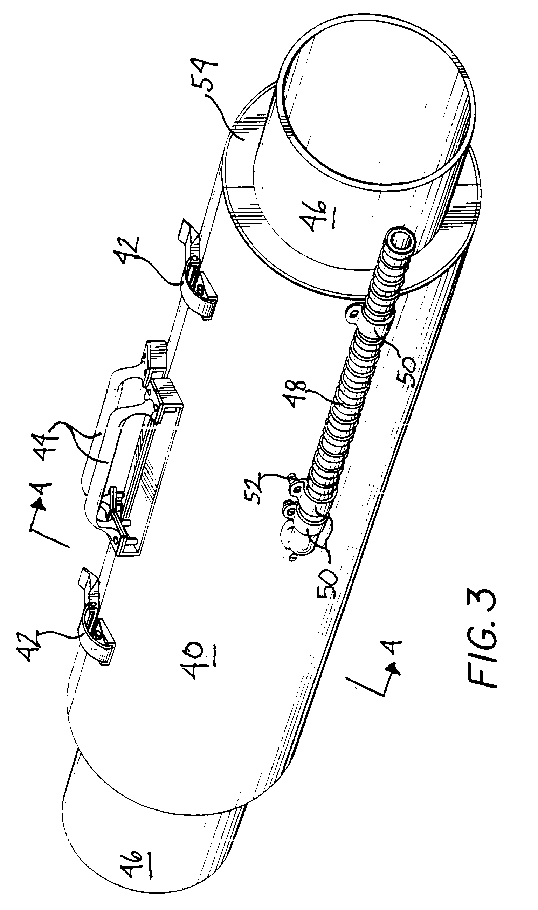

With reference now to Figs. 2 and 3, it will be seen that the heating device described therein for purposes of illustration has two arcuate sections hinged together by a pair of hinges 56. As will be appreciated, two is the minimum number of hinged sections the unit may have to be able to be placed around the pipe and then closed to encircle the entire circumference of pipe. However, with larger pipes it is visualized that having only two arcuate sections may make the heating device awkward and cumbersome to handle and transport. Accordingly, if desired, the device may comprise more than two arcuate sections, the intermediate sections being hinged as illustrated. In any case, the sum total of the sections will define a substantially circular heating jacket when wrapped over a pipe surface.

Irrespective of the number of hinged arcuate sections, means must be provided for securing the device in the closed position surrounding a pipe 46. As illustrated, one of the free (unhinged) edges of the heating device is shown to be provided with a pair of latches 42 for securing that section to catches 42a on the other free edge.

The heating device 38 has sturdy heat-insulated grips 44 on each of the outer edges to facilitate opening and closing the device around a pipe. The grips are preferably in the form of handles for the added function of transporting the device from one location to another.

As seen in Fig. 1, the heater cable 36 is preferably not secured at its trailing end to the heating device 36, but instead, as previously alluded to, is provided with a "quick disconnect" dovetail connector 36a adapted for being removably secured in electrical communication with the heating device by mating with heating device connector 48a on cable 48 leading to the heating element 58. In this manner, the heating device 36 can be readily connected and disconnected from the controller for ease of handling and transport. As shown in Figs. 1 and 2, cable 48 leading to the heating device is preferably provided with a protective sheathing. Cable 48 may be securely attached to the heating device to guard against dislodgment or damage by means of brackets 50 and metal screws 52.

An important feature of the novel heating device of this invention is the provision of compressible seal 54 isolating the heating zone around the pipe surface form ambient temperature. Seal 54 may comprise a semirigid heat-resistant foam which, as seen, raises the heating element away from the pipe surface while compressing against it on closure to provide an airtight gasket to prevent heat loss.

In operation, the heating device in its open position is place around the pipe at the desired location and then clamped shut, providing a tight closure surrounding the heating zone. The "quick disconnect" cable connectors 36a, 48a which enable rapid connection to the controller are mated, after which the main power switch 24 is turned on to energize the system. The heating cycle may then be initiated by turning on switch 22 for the heating cycle. At this time, the microprocessor controller then takes over and regulates the heating cycle.

The heat ramping rate is precisely regulated to the optimal set point of the desired temperature. Upon attaining the set point, the microprocessor then initiates a dwell mode where the power is sufficiently maintained for the desired time set period at the set point temperature for optimal heat application. After the desired heating dwell time is completed, the controller will automatically terminate the heating cycle and disengage power to the heating device through cable 36. The heating and controller units may then be detached, heating device 38 unlatched, opened and moved to the next location along the pipeline where the process is repeated.

In a typical heating cycle, over a period of perhaps three minutes a temperature of on the order of 300° F may be achieved. This temperature may be maintained for perhaps another couple of minutes, after which the pipe is allowed to cool down to ambient temperature.

The novel device of this invention for applying heat to the surface of a pipe can be described as user friendly and as being one that provides the operator with a reliable, consistent heat application for coating pipelines in the field. It eliminates problems with the direct flame impingement procedures of the prior art such as operator induced hot/cold spots, coating burnthrough, and insufficient heating rates. Optimal heat is applied over the entire circumference of the pipe at the joint or other desired location for a pre-set time period and at an automatically controlled heating rate, thus avoiding operator errors and inconsistencies. In addition, as previously mentioned, operator safety is materially improved by the elimination of the dangers inherent in the use of open flame.

From the foregoing description and illustrative drawings depicting one preferred embodiment of the invention, it will thus be seen that the present invention provides an elegant solution to the states task of uniformly heating a pipe surface for application of a protective layer thereto while providing the aforementioned additional significant advantages.

It will be appreciated that various changes and additions may be made to the novel heating system of this invention with departing from the scope of the invention herein contemplated.

Accordingly, the foregoing description and accompanying drawings shall be taken as being illustrative and not in a limiting sense.

## Claims

1. A device adapted for applying a uniform desired heat to the circumference of a portion of a metal pipe surface comprising a plurality of arcuate sections, each section comprising an outer rigid shell and an inner electrically resistive heating element which, upon impressing an electrical current will emit heat for heating the metal pipe surface, each arcuate section having opposed end edges and opposed side edges defining the dimensions of the section, each section being pivotally connected to the next adjacent section along opposed side edges whereby to form an interconnected length of sections having opposed free side edges; means for releasably securing the opposed free side edges together to define a substantially circular jacket adapted to encircle a pipe surface when the device is wrapped around the pipe and the free side edges are then secured together; and means for connecting the electrically heat resistive element to a source of electricity.

2. A device as defined in Claim 1 wherein each of the arcuate sections has an intermediate insulating layer disposed between the outer shell and the inner heating element.

3. A device as defined in Claim 1 wherein the opposed inner end edges of each section has a heat-resistant compressible element secured thereto, the heat-resistant elements on the opposed end edges of the interconnected sections together defining opposed compressible seals for preventing heat loss when the device is secured around the pipe surface.

4. A device as defined in Claim 1 wherein the device consists of only two arcuate sections.

5. A device as defined in Claim 1 including means for controlling the time and temperature of a heating cycle for applying heat to the pipe surface.
